(19) Europäisches Patentamt
European Patent Office
Office européen des brevets

(11) **EP 4 615 162 A1**

(12) **EUROPEAN PATENT APPLICATION**
published in accordance with Art. 153(4) EPC

(43) Date of publication:
**10.09.2025 Bulletin 2025/37**

(21) Application number: **23903799.7**

(22) Date of filing: **21.11.2023**

(51) International Patent Classification (IPC):
*H05B 6/12* (2006.01)  *H05B 6/06* (2006.01)
*H05B 6/04* (2006.01)

(52) Cooperative Patent Classification (CPC):
**H05B 6/04; H05B 6/06; H05B 6/12**

(86) International application number:
**PCT/KR2023/018756**

(87) International publication number:
**WO 2024/128596 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 16.12.2022  JP 2022201363
26.10.2023  JP 2023183791

(71) Applicant: **Samsung Electronics Co., Ltd.**
**Suwon-si, Gyeonggi-do 16677 (KR)**

(72) Inventors:
• **NISHIKOORI, Nobuharu**
 **Yokohama-shi, Kanagawa 230--0027 (JP)**
• **SODA, Yasushi**
 **Yokohama-shi, Kanagawa 230--0027 (JP)**
• **OOSAKO, Seisaku**
 **Yokohama-shi, Kanagawa 230--0027 (JP)**
• **KANAGAWA, Tomoyuki**
 **Yokohama-shi, Kanagawa 230--0027 (JP)**

(74) Representative: **Walaski, Jan Filip et al**
**Venner Shipley LLP**
**200 Aldersgate**
**London EC1A 4HD (GB)**

(54) **INDUCTION HEATING COOKER**

(57) An induction heating cooker for inductively heating a heating object placed on a top plate is disclosed. The induction heating cooker includes a substrate positioned on a back surface of the top plate; a heating coil provided on the substrate and configured to heat a heating object, the heating coil being in a sheet shape; and a sensor coil provided on the substrate in such a way as to be integrated into the heating coil, and configured to detect a position of the heating object.

FIG. 4

## Description

### Technical Field

The present disclosure relates to an induction heating cooker for inductively heating a heating object such as a pot.

### Technical Field

Conventional induction heating cookers use litz wires in the shape of a coil as a heating coil for heating a heating object placed on a top plate. In order to heat a heating object placed at an arbitrary position on the top plate, the induction heating cookers include a sensor coil to detect a position of the heating object. The heating coil and the sensor coil are arranged as different structures. This type of induction heating cooker is disclosed in Japanese Patent Application No. 2016-77445.

### Disclosure of Invention

### Solution to Problem

An induction heating cooker according to an aspect of the present disclosure may include a top plate and a substrate positioned on a back surface of the top plate. A heating coil for inductively heating a heating object may be provided on the substrate. A sensor coil for detecting a position of the heating object may be provided on the substrate in such a way as to be integrated into the heating coil.

### Brief Description of Drawings

FIG. 1 is a schematic diagram showing an entire configuration of an induction heating cooker according to an embodiment of the present disclosure.
FIG. 2 is a schematic diagram of an embodiment of a position detection sensor.
FIG. 3 is a schematic diagram of an embodiment of a substrate.
FIG. 4 is a schematic diagram of an embodiment of a substrate.
FIG. 5 is a functional block diagram of an embodiment of a control device.
FIG. 6 is a view for describing arrangements of sensor coils with respect to heating coils.
FIG. 7 is a schematic diagram showing an embodiment of an arrangement of sensor coils with respect to heating coils.
FIG. 8 shows calculation results of eddy current loss according to arrangements of sensor coils.
FIG. 9 is a schematic diagram showing an embodiment of an arrangement of sensor coils.
FIG. 10 is a schematic diagram for describing a configuration of a substrate in the case of an existing heating coil using litz wires.
FIG. 11 is a schematic diagram showing a configuration of a substrate in the case of using a heating coil according to an embodiment of the present disclosure.
FIG. 12 is a circuit diagram showing a configuration of a sensor coil, a driving circuit portion, a MUX portion, and a protection circuit portion according to an embodiment of the present disclosure.
FIG. 13 schematically shows operation states of an embodiment of a protection circuit portion.
FIG. 14 shows a count value when no temperature correction is performed and a count value when temperature correction is performed.
FIG. 15 shows a count value when magnetic flux absorption is not corrected and a count value when magnetic flux absorption is corrected.

### Mode for the Invention

Various embodiments of the present disclosure and terms used therein are not intended to limit the technical features described in the present disclosure to particular embodiments, and it should be construed as including various modifications, equivalents, or alternatives of a corresponding embodiment.
With regard to description of drawings, similar reference numerals may be used for similar or related components.
A singular form of a noun corresponding to an item may include one item or a plurality of the items unless context clearly indicates otherwise.

As used herein, each of the expressions "A or B," "at least one of A and B," "at least one of A or B," "A, B, or C," "at least one of A, B, and C," and "at least one of A, B, or C," may include one or all possible combinations of the items listed together with a corresponding expression among the expressions.

The term "and/or" includes any and all combinations of one or more of a plurality of associated listed items.

The terms "1st", "2nd", first", "second", etc., may be used only to distinguish one component from another, not intended to limit the corresponding component in other aspects (e.g., importance or order).

It is said that one (e.g., first) component is "coupled" or "connected" to another (e.g., second) component, with or without the terms "functionally" or "communicatively". When referenced, it means that the one component can be connected to the other component directly (e.g., by wire), wirelessly, or through a third component.

It will be understood that when the terms "includes," "comprises," "including," and/or "comprising," when used in this specification, specify the presence of stated features, figures, steps, operations, components, members, or combinations thereof, but do not preclude the presence or addition of one or more other features, figures, steps, operations, components, members, or combinations thereof.

An expression that one component is "connected", "coupled", "supported", or "in contact" with another component includes a case in which the components are directly "connected", "coupled", "supported", or "in contact" with each other and a case in which the components are indirectly "connected", "coupled", "supported", or "in contact" with each other through a third component.

It will also be understood that when one component is referred to as being "on" or "over" another component, it can be directly on the other component or intervening components may also be present.

In an induction heating cooker, in the case in which a heating coil and a sensor coil are different structures, a misalignment in position of the sensor coil with respect to the heating coil may occur, which may make it difficult to detect a slight difference in eddy current flowing through a heating object or an exact position of the heating object. Therefore, accuracy in detecting the position of the heating object may deteriorate. In order to ensure the accuracy of position detection, the number of sensor coils needs to increase. In the case of using litz wires as a heating coil, a member for maintaining the litz wires in the shape of a coil is needed, which increases the number of components. In the case of installing a heating coil on a flexible substrate, component cost of the flexible board is high and the flexible substrate needs to be configured separately from the heating coil. Therefore, there may be a problem that reliability of the heating coil cannot be guaranteed.

The present disclosure may provide an induction heating cooker capable of improving accuracy in detecting a position of a heating object by suppressing a misalignment in position of a sensor coil with respect to a heating coil. The present disclosure may provide an induction heating cooker capable of reducing the number of components. Hereinafter, embodiments of an induction heating cooker according to the present disclosure will be described with reference to the drawings.

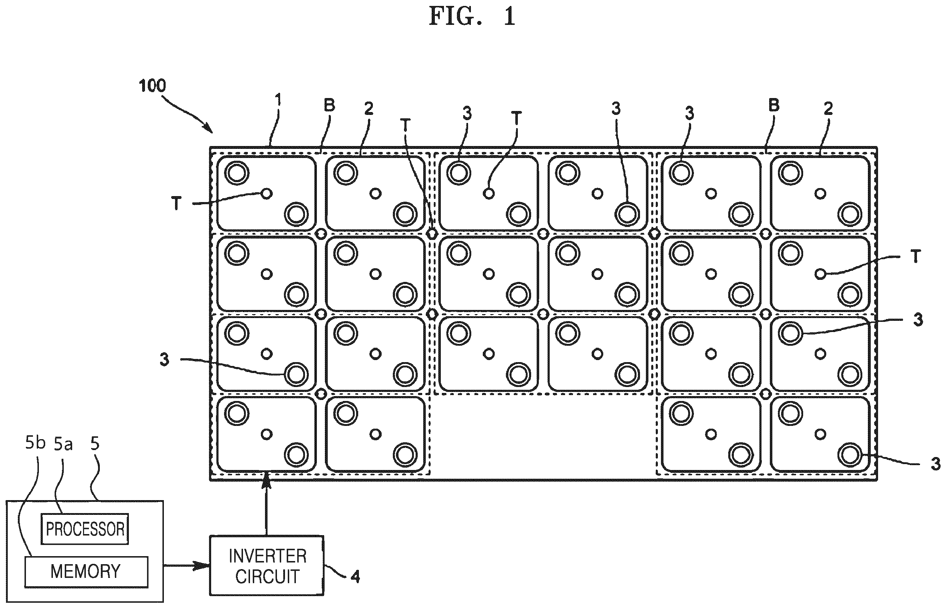

The present disclosure relates to an induction heating cooker that inductively heats a heating object placed on a top plate, for example, a cooking tool such as a cooking pot. The present disclosure relates to an induction heating cooker capable of heating a heating object placed at any position on the top plate. FIG. 1 is a schematic diagram showing an entire configuration of an induction heating cooker according to an embodiment of the present disclosure. Referring to FIG. 1, an induction heating cooker 100 may include a top plate 1 on which a heating object is placed, and a substrate B. The substrate B may include a heating coil 2 and a sensor coil 3. The heating coil 2 may inductively heat the heating object. The sensor coil 3 may detect a position of the heating object. The heating coil 2 and the sensor coil 3 may be integrated into one body. 'Integrated' means that the heating coil 2 and the sensor coil 3 form a structure that can be handled as a single assembly unit in a process of manufacturing the induction heating cooker 1. In the current embodiment, the structure including the heating coil 2 and the sensor coil 3 may be implemented by the substrate B. An inverter circuit 4 may supply alternating current to the heating coil 2. A control device 5 may control the inverter circuit 4.

An outer surface of the top plate 1 may be a flat mounting surface on which a heating object is placed. The top plate 1 may be a flat plate formed of an electrical insulating material such as, for example, glass or ceramic.

The heating coil 2 may be installed on a back surface of the top plate 1. Referring to FIG. 1, a plurality of heating coils 2 may be arranged to form a two-dimensional array (vertical and horizontal matrix) in a plan view. For example, as shown in FIG. 1, a pair of heating coils 2 may be installed on a common substrate B positioned on the back surface of the top plate 1, and substrates B on each of which a pair of heating coils 2 are installed may be arranged to form a two-dimensional array (vertical and horizontal matrix) in a plan view.

The heating coil 2 may be installed in a sheet shape on the substrate B. For example, the heating coil 2 may be formed on the substrate B by a patterning process using photoresist, etc. In the embodiment shown in FIG. 1, two heating coils 2 may be installed on one substrate B. A distance between the two heating coils 2 may be smaller than half an outer diameter (for example, a maximum or minimum external dimension) of each heating coil 2. The plurality of heating coils 2 may have the same shape and size. The plurality of heating coils 2 may not necessarily have the same shape and size. For example, at least one of a shape or size of at least one of the plurality of heating coils 2 may be different from that of the others.

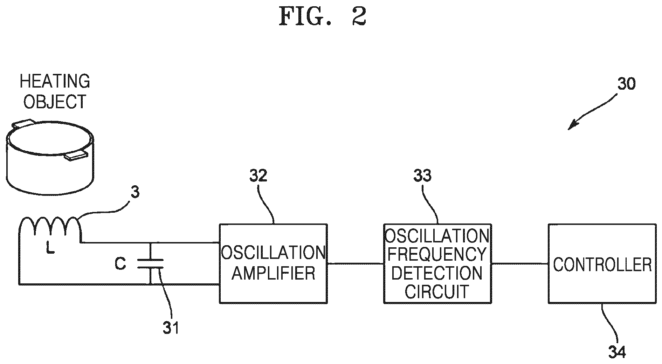

The sensor coil 3 may be installed on the back surface of the top plate 1. For example, the sensor coil 3 may include an inductive proximity coil installed on the substrate B. The sensor coil 3 may detect a position of a heating object placed on the top plate 1. FIG. 2 is a schematic diagram of an embodiment of a position detection sensor 30. Referring to FIG. 2, the sensor coil 3 may form the position detection sensor 30 together with a resonance capacitor 31, an oscillation amplifier 32, an oscillation frequency detection circuit 33, and a controller 34.

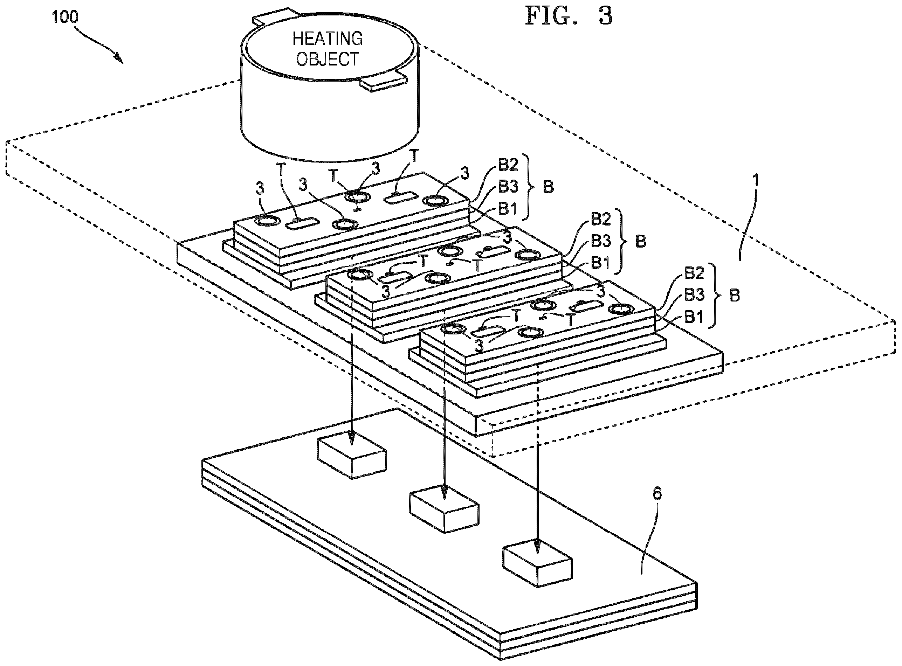

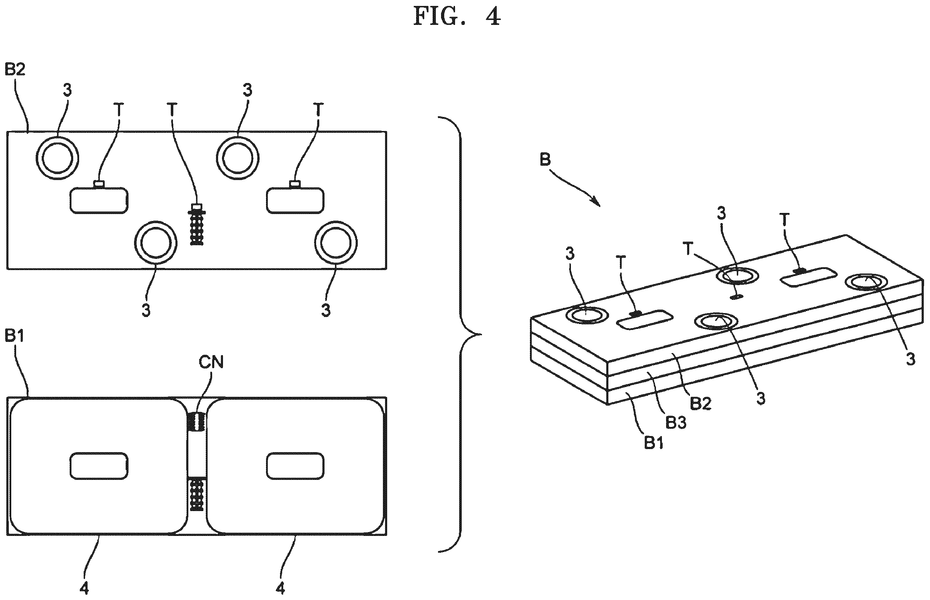

FIGS. 3 and 4 are schematic diagrams of an embodiment of the substrate B. Referring to FIGS. 3 and 4, the substrate B may include a heating coil layer B1 including the heating coil 2, and a sensor layer B2 including the sensor coil 3. An insulating layer B3 may be positioned between the heating coil layer B1 and the sensor layer B2. In other words, the substrate B may be formed by laminating the heating coil layer B1, the insulating layer B3, and the sensor layer B2 into one body. Accordingly, the heating coil 2 and the sensor coil 3 may be integrated into one body and arranged, and a position of the sensor coil 3 with respect to the heating coil 2 may be set. That is, a relative positional relationship between the heating coil 2 and the sensor coil 3 in each substrate B may be common in the plurality of substrates B arranged.

Referring to FIGS. 3 and 4, the sensor layer B2 may be positioned toward the top plate 1, and the heating coil layer B1 may be positioned to an opposite side of the top plate 1 with respect to the sensor layer B2. On the heating coil layer B1, a connection connector CN connected to a control board 6 may be mounted. The connection connector CN may be mounted on the heating coil layer B1 in a direction opposite to the top plate 1. By the connection connector CN, the substrate B may be connected to the control board 6. That is, the heating coil 2 may be connected to the connection connector CN and connected to the control board 6 through the connection connector CN.

Also, the induction heating cooker 100 according to an embodiment may include a temperature sensor T as shown in FIGS. 1, 3, and 4. The temperature sensor T may be installed on the substrate B or may be installed between neighboring substrates B. The temperature sensor T may detect a temperature of a heating object and/or the heating coil 2. In the current embodiment, the temperature sensor T may be integrated into the heating coil 2 and the sensor coil 3. The temperature sensor T may be positioned at or near a center of the heating coil 2, or near the connection connector CN for connecting the heating coil 2 to the control board 6.

The inverter circuit 4 may convert an alternating current voltage supplied from a power supply not shown into an arbitrary driving frequency and output the arbitrary driving frequency to the heating coil 2. For example, the inverter circuit 4 may be a half-bridge inverter circuit using a switching element, or may be a full-bridge inverter circuit.

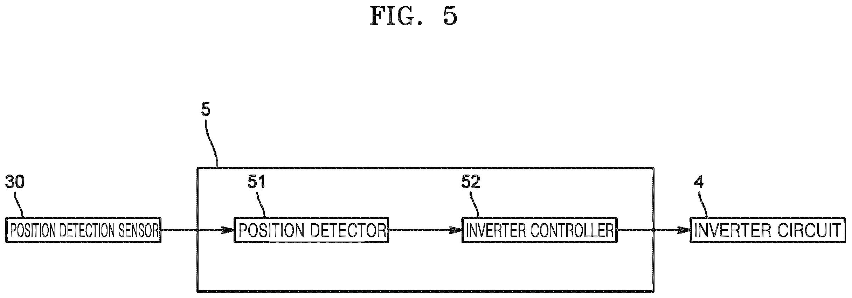

FIG. 5 is a functional block diagram of an embodiment of the control device 5. Referring to FIGS. 1 and 5, the control device 5 may include a processor 5a, for example, a central processing unit (CPU), and memory 5b. The control device 5 may further include an input device. The processor 5a may read a program stored in the memory 5b and execute the program. Accordingly, the control device 5 may function as a position detector 51 and an inverter controller 52, as shown in FIG. 5.

The position detector 51 may detect a position of a heating object based on an output value from the position detection sensor 30. For example, the position detector 51 may detect a position and size of a heating object placed on the top plate 1. For example, the position detection sensor 30 may output an inductance value of the sensor coil 3. The inductance value may change depending on whether a heating object is placed above the sensor coil 3.

An inductance value output from the position detection sensor 30 may change depending on a distance from a heating object to the sensor coil 3. For example, when the heating object moves from a position far from the sensor coil 3 to a position close to the sensor coil 3, the inductance value may be reduced. The position detector 51 may detect a position and size of the heating object by comparing the inductance value output from the position detection sensor 30 to a preset threshold value. The position detector 51 may determine that the heating object is placed above a sensor coil 3 having an inductance value that is less than the threshold value, and output an upper side of the corresponding sensor coil 3 as a detection position at which the heating object is placed.

The inverter controller 52 may calculate real power, which is actual power supplied from the power supply not shown, and control a driving frequency of the inverter circuit 4 such that the calculated real power comes close to target power corresponding to thermal power set by a user. The inverter controller 52 may control an on/off duty ratio of a switching device of the inverter circuit 4. The inverter controller 52 may control the inverter circuit 4 to supply power selectively to a heating coil 2 located below a heating object placed on the top plate 1 among the plurality of heating coils 2.

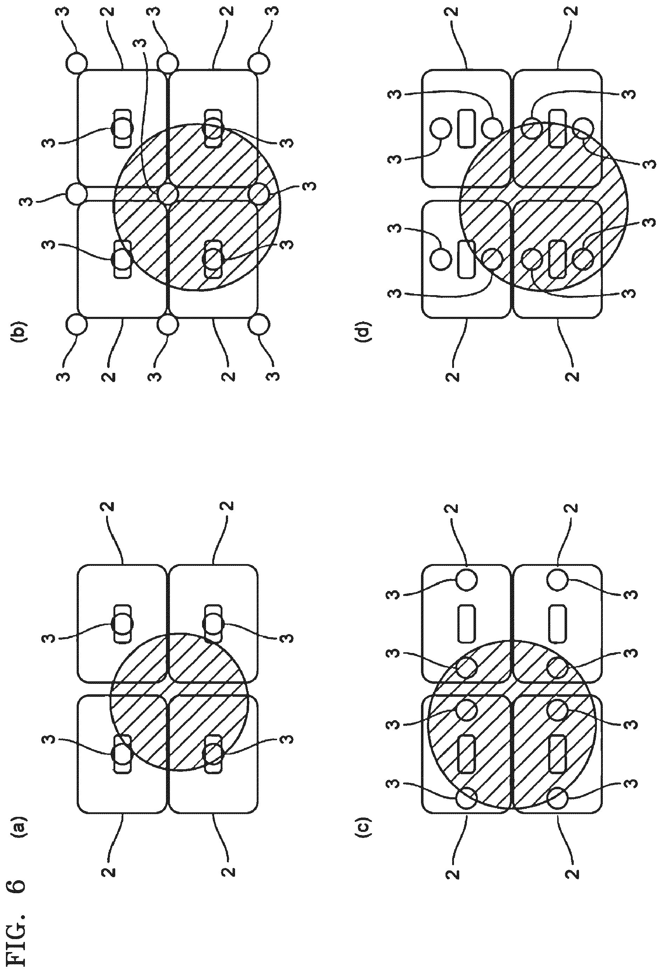

FIG. 6 is a view for describing arrangements of the sensor coil 3 with respect to the heating coil 2. Arrangements of the sensor coil 3 with respect to the heating coil 2 will be described with reference to FIG. 6. In FIG. 6, an area where oblique lines are drawn represents a position where a heating object is placed.

First, a case in which one sensor coil 3 is positioned for one heating coil 2 is considered. For example, referring to FIG. 6(a), four heating coils 2 and four sensor coils 3 respectively corresponding to the four heating coils 2 are shown. In the case of this type of arrangement, because the number of the sensor coils 3 is too small, it may be difficult to ensure accuracy in detecting a position of a heating object. In order to ensure accuracy in detecting a position of a heating object, as shown in FIG. 6(b), a plurality of sensor coils 3, for example, four sensor coils 3 may be arranged for one heating coil 2. In this case, the number of components may increase, which may increase cost of the induction heating cooker. As shown in FIG. 6(c), two sensor coils 3 may be arranged for one heating coil 2 in a horizontal direction. In this case, the number of components may be less than in the arrangement shown in FIG. 6(b) but it may be difficult to ensure accuracy of position detection in a vertical direction. As shown in FIG. 6(d), two sensor coils 3 may be arranged for one heating coil 2 in the vertical direction. In this case, the number of components may be less than in the arrangement shown in FIG. 6(b) but it may be difficult to ensure accuracy of position detection in the horizontal direction.

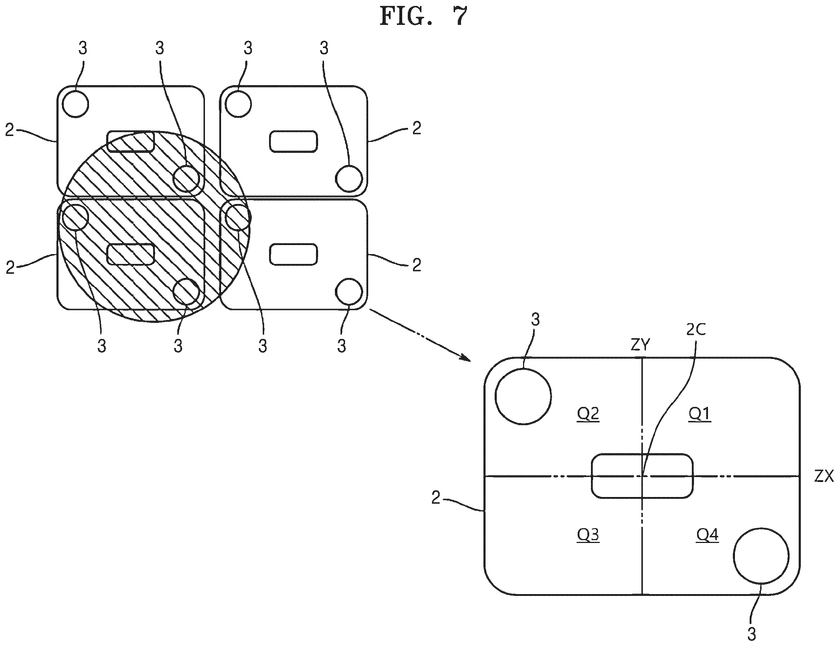

FIG. 7 is a schematic diagram showing an embodiment of an arrangement of the sensor coil 3 with respect to the heating coil 2. Referring to FIG. 7, two sensor coils 3 may be arranged for one heating coil 2. The two sensor coils 3 may be arranged diagonally with a center 2C of the heating coil 2 in between. In other words, when an area where the heating coil 2 is formed is divided into four areas by two imaginary lines ZX and ZY that pass through the center 2C of the heating coil 2 and are orthogonal to each other, the two sensor coils 3 may be respectively positioned in two diagonal areas facing each other with respect to the center 2C of the heating coil 2. For example, the two sensor coils 3 may be arranged in a first quadrant Q1 and a third quadrant Q3 or in a second quadrant Q2 and a fourth quadrant Q4.

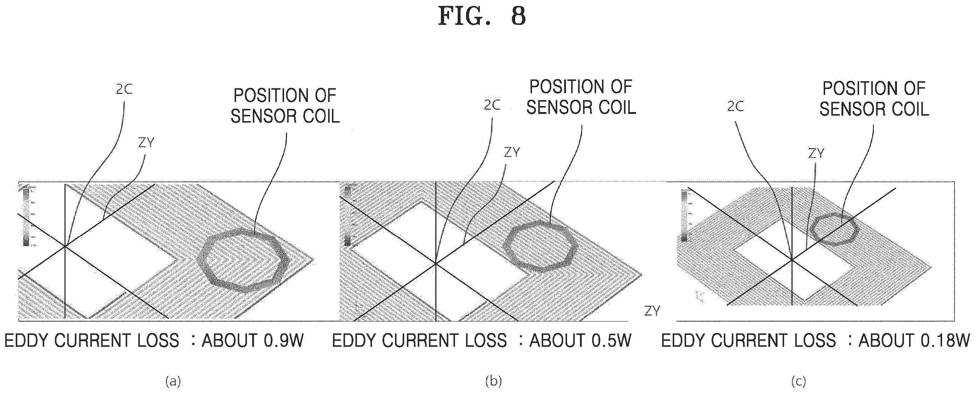

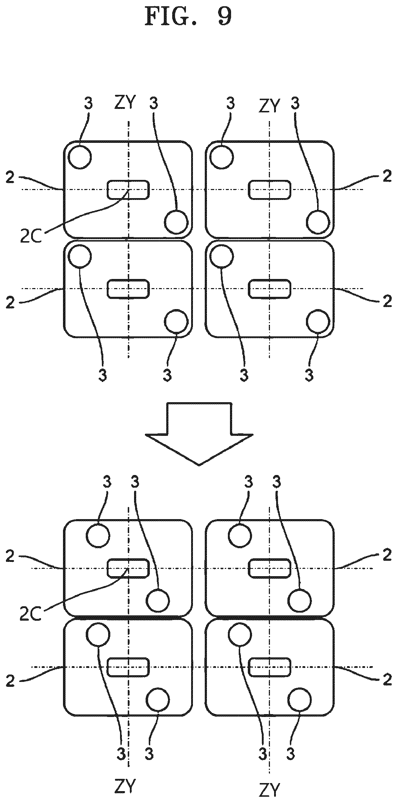

FIG. 8 shows calculation results of eddy current loss according to arrangements of the sensor coil 3. FIG. 9 is a schematic view showing an embodiment of an arrangement of the sensor coil 3. As shown in FIG. 8(a), as the sensor coil 3 is closer to a corner portion of the heating coil 2, eddy current loss may increase. As shown in FIG. 8(c), when the sensor coil 3 is positioned in the vertical direction with respect to the heating coil 2 (that is, when the sensor coil 3 is positioned on the imaginary line ZY (see FIG. 7)), it may be difficult to ensure accuracy of position detection in the horizontal direction, as described with reference to FIG. 6(c).

Referring to FIGS. 8(b) and 9, two sensor coils 3 may be arranged diagonally on one heating coil 2 at positions spaced from the corner portions of the heating coil 2 toward the center of the heating coil 2. In other words, two sensor coils 3 may be arranged between the corner portions of the corresponding heating coil 2 and the imaginary line ZY (see FIG. 7). According to this arrangement, accuracy of position detection may be ensured while suppressing an increase of the number of components, and eddy current loss may be reduced compared to the arrangement shown in FIG. 8(a). Although not shown in the drawings, the sensor coils 3 may be arranged between the corner portions of the corresponding heating coil 2 and the imaginary line ZX (see FIG. 7).

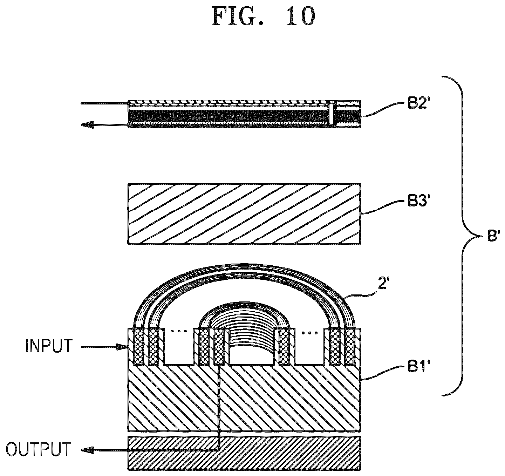

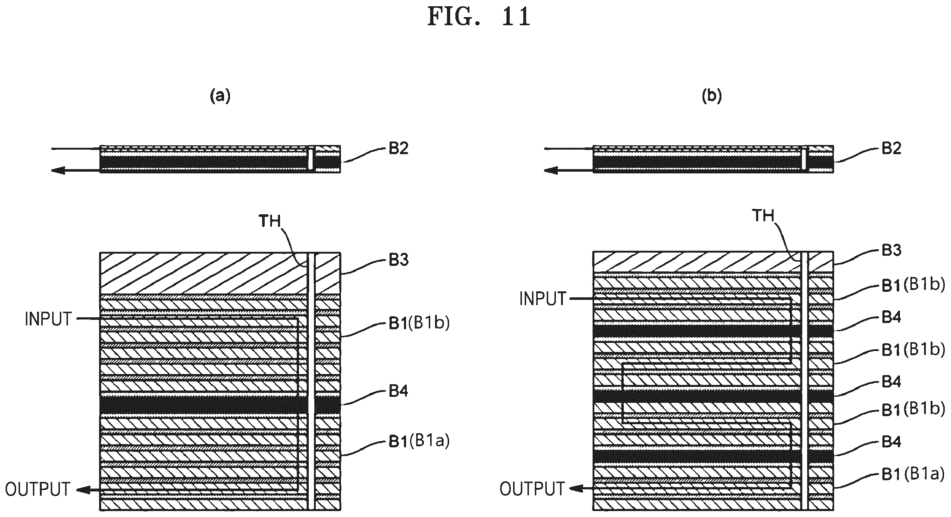

Hereinafter, a laminated structure of the heating coil layer B1 and the sensor layer B2 will be described. FIG. 10 is a schematic view for describing a configuration of a substrate in an existing heating coil 2' using litz wires. FIG. 11 is a schematic view showing a configuration of a substrate in the case of using the heating coil 2 according to an embodiment of the present disclosure.

First, a configuration in which the existing heating coil 2' using litz wires in the shape of a coil is formed on a heating coil layer B1' is shown in FIG. 10. An output of an inner circumferential portion of the heating coil 2' becomes a high output of, for example, up to 1000 V, and therefore, a voltage difference between the heating coil layer B1' and a sensor layer B2' of a low voltage increases. As a result, a thick insulation layer B3' needs to be positioned between the heating coil layer B1' and the sensor layer B2', which may limit thinning of a substrate B'.

The substrate B according to an embodiment of the present disclosure may include, as shown in FIGS. 11(a) and 11(b), two or more heating coil layers B1 in which the heating coil 2 is installed and which are insulated from each other, a sensor layer B2 in which the sensor coil 3 is installed, and an insulation layer B3 positioned between the heating coil layer B1 and the sensor layer B2, wherein a heating coil layer B1a connected to the resonance capacitor 31 (see FIG. 2) among the two or more heating coil layers B1 may be positioned farther away from the sensor layer B2 than another heating coil layer B1b. In other words, a plurality of heating coil layers B1 may be laminated such that directions of current flowing through two adjacent heating coil layers B1 are opposite to each other. The plurality of heating coil layers B1 may be insulated from each other by a plurality of core layers B4. That is, each core layer B4 may be positioned between two adjacent heating coil layers B1. The heating coil layer B1a of an output side among the plurality of heating coil layers B1 may be positioned farther away from the sensor layer B2 than the heating coil layer B1b of an input side.

For example, in the case of a two-layer structure in which current is reciprocated once along two heating coil layers B1 as shown in FIG. 11(a), outputs of inner circumferential portions of the heating coil layers B1 may be suppressed to about 500 V even with the same output as in a heating coil having the shape of litz wires described above. For example, in the case of a four-layer structure in which current is reciprocated two times along four heating coil layers B1 as shown in FIG. 11(b), outputs of inner circumferential portions of the heating coil layers B1 may be suppressed to about 250 V. As a result, an increase in thickness of the insulation layer B3 positioned between the heating coil layer B1, for example, the heating coil B1b of the input side and the sensor layer B2 may be suppressed, which may contribute to thinning of the substrate B.

Also, a high-voltage part of the heating coil 2 may be applied to a through hole TH connecting the heating coil layer B1, the sensor layer B2, and the insulation layer B3, and therefore, the sensor coil 3 of the sensor layer B2 may be installed without overlapping with the part. Accordingly, an increase in thickness of the insulation layer B3 may be suppressed, which may contribute to thinning of the board B.

In the induction heating cooker 100, the heating coil 2 and the sensor coil 3 may be integrated into one body, thereby suppressing a misalignment in position of the sensor coil 2 with respect to the heating coil 2. Also, because the heating coil 2 having the sheet shape is used, the number of components may be reduced compared to the existing heating coil using litz wires. According to the configuration in which two sensor coils 3 are arranged diagonally with the center 2C of the heating coil 2 in between, it is possible to improve accuracy in detecting a position of a heating object by using a small number of sensor coils 3. According to the configuration in which a distance between two heating coils 2 installed on one substrate B is smaller than half an outer diameter of each heating coil 2, heating efficiency may be ensured while suppressing influence of the heating coils 2 on the sensor coil 3. According to the configuration in which the heating coil layer B1a of the output side connected to the resonance capacitor 31 (see FIG. 2) among the plurality of heating coil layers B1 laminated is positioned farther away from the sensor layer B2 than the heating coil layer B1b of the input side, the heating coil layer B1b close to the sensor layer B2 may be designed with a low withstand voltage, which may enable a thin design of the insulation layer B3. According to the structure in which the temperature sensor T is integrated into the heating coil 2 and the sensor coil 3, product costs may be reduced due to a reduction of wirings, etc. According to the structure in which the temperature sensor T is positioned at or near the center of the heating coil 2, or near the connection connector CN to which the heating coil 2 is connected, the temperature sensor T may be positioned at a location where a temperature is most likely to be high to detect a temperature of the heating coil 2 or the connection connector CN, which enables control of the heating coil 2 with high reliability. According to the structure in which the connection connector CN is mounted on the substrate B in the direction opposite to the top plate 1, a distance between a heating object and the heating coil 2 may be smaller than in a structure in which the connection connector CN is mounted toward the top plate 1, and therefore, the heating object may be efficiently heated.

A configuration of the induction heating cooker 1 according to the present disclosure are not limited to the above-described embodiments. For example, in the above-described embodiments, two heating coils 2 may be positioned on one substrate B. However, one heating coil 2 may be positioned on one substrate B, or three or more heating coils 2 may be positioned on one substrate B. In the above-described embodiments, two sensor coils 3 may be positioned for one heating coil 2. However, three or more sensor coils 3 may be positioned for one heating coil 2. Also, in the above-described embodiments, the sensor coil 3 may be spaced from the corner portion of the heating coil 2 toward the center, but the sensor coil 3 may be positioned at the corner portion of the heating coil 2. According to this arrangement, accuracy in detecting a position of a heating object in the horizontal and vertical directions may be improved even though a small number of sensor coils 3 are arranged.

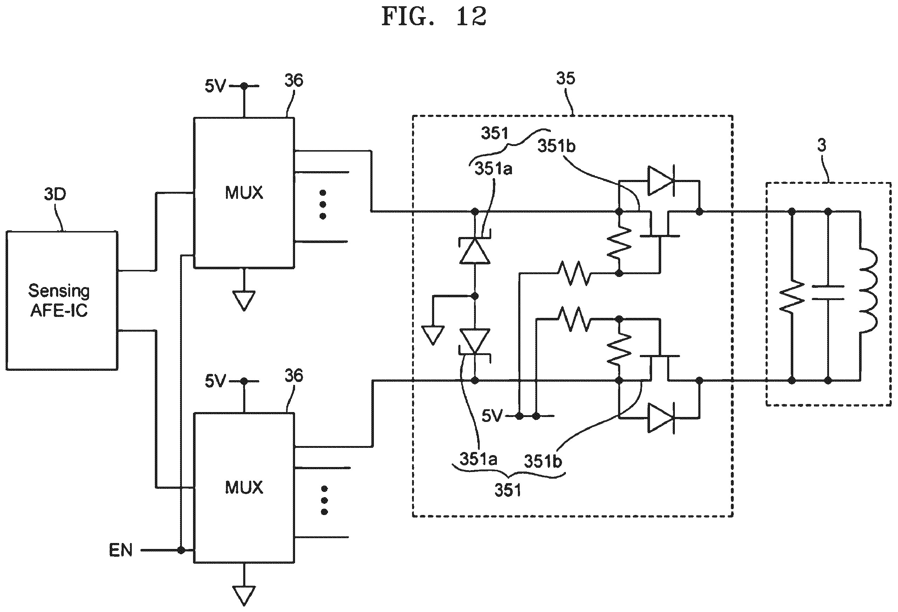

FIG. 12 is a circuit diagram showing a configuration of the sensor coil 3, a driving circuit portion 3D, a MUX portion 36, and a protection circuit portion 35 according to an embodiment of the present disclosure. Referring to FIG. 12, the induction heating cooker 100 according to an embodiment may include the protection circuit portion 35. The protection circuit portion 35 may be positioned between the sensor coil 3 and the driving circuit portion 3D connected to the sensor coil 3. The protection circuit portion 35 may protect the driving circuit portion 3D from an induced voltage (for example, up to $\pm 80$ V) generated in the sensor coil 3.

The driving circuit portion 3D may be provided with the resonance capacitor 31, the oscillation amplifier 32, the oscillation frequency detection circuit 33, and the controller 34, as shown in FIG. 2. A plurality of sensor coils 3 may be connected to one driving circuit portion 3D via multiplexers (MUX portions) 36 in between. The protection circuit portion 35 may be installed between each sensor coil 3 and a MUX portion 36 connected to the sensor coil 3. That is, the protection circuit portion 35 may be installed to correspond to each of the plurality of sensor coils 3.

For example, the protection circuit portion 35 may include a protection element 351 including a diode 351a and a field effect transistor (FET) 351b. The diode 351a may include a schottky diode. The FET 351b may include a metal oxide semiconductor field effect transistor (MOSFET). The protection element 351 may be connected in series to each of both terminals of the sensor coil 3. In the protection element 351, a drain of the FET 351b may be connected to the sensor coil 3. In the protection element 351, the diode 351a may be connected to a source of the FET 351b. A cathode of the diode 351a may be connected toward the sensor coil 3, that is, to a source line of the FET 351b, and an anode of the diode 351a may be grounded. In FIG. 12, the protection element 351 may be configured such that, when a source voltage of the FET 351b rises to 5 V or higher, the FET 351b is automatically turned off.

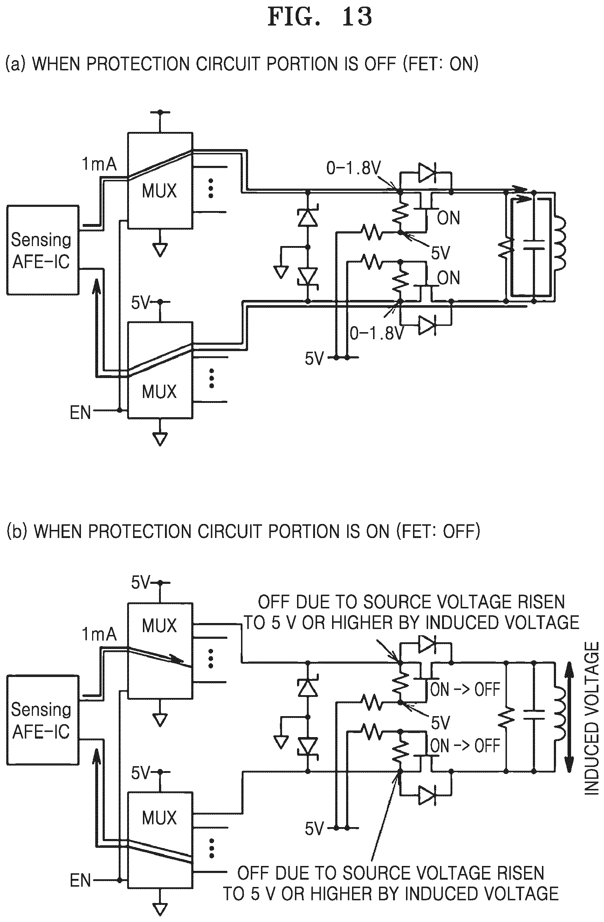

FIG. 13 schematically shows operation states of an embodiment of the protection circuit portion 35. FIG. 13(a) shows a case in which the protection circuit portion 35 is in an off state (FET 351b is on), and FIG. 13(b) shows a case in which the protection circuit portion 35 is in an on state (FET 351b is off). FIG. 13(b) shows a state in which a source voltage of the FET 351b becomes 5 V and the FET 351b is turned off due to an induced voltage generated in a sensor coil 3 not selected by the MUX portion 36. In addition, the case in which the protection circuit portion 35 is in an on state (FET 351b is off) may include, for example, a case in which a source voltage of the FET 351b becomes 5V due to an induced voltage generated in the sensor coil 3 when the MUX portion 36 is disable (invalid), and a case in which a source voltage of the FET 351b becomes 5 V due to an induced voltage generated in the sensor coil 3 when an error is generated in the MUX portion 36, the driving circuit portion 3D, etc.

By the protection circuit portion 35, the MUX portion or the driving circuit portion 3D may be protected from an induced voltage generated in the sensor coil 3. Because the protection circuit portion 35 described above protects the sensor coil 3 with a withstand voltage of the FET 351b without consuming any induced voltage, the protection circuit portion 35 may also respond to a high induced voltage.

In the induction heating cooker 100 according to an embodiment, an output value (count value) of the sensor coil 3 may be corrected by using a temperature detected by the temperature sensor T. Here, resistance Rp of a resonance circuit may be expressed by Equation (1) below. In Equation (1), L is inductance of the sensor coil 3, Rs is resistance of the sensor coil 3, and C is capacitance of the resonance capacitor 31.

$$Rp=L/(Rs \times C) \text{ --- Equation (1)}$$

The driving circuit portion 3D that drives the sensor coil 3 may control the sensor coil 3 with constant current and output a ratio of frequencies by a change of an inductance value as a count value. That is, the count value may be proportional to resistance Rp of the resonance circuit. A change of resistance Rp of the resonance circuit according to a temperature may be expressed by Equation (2) below when a coil material of the sensor coil 3 is constant. $\alpha$ is a temperature coefficient of resistance.

$$Rp(t)=Rp(t0) \times (1+\alpha(t-t0)) \text{ --- Equation (2)}$$

That is, the count value may decrease linearly with respect to a temperature change. Accordingly, the count value may be corrected based on, for example, Equation (3) below by using a temperature change (T-T0) with respect to a preset reference temperature T0 and a temperature correction coefficient k obtained in advance.

$$\text{Count Value after Correction = Count Value before Correction + kx(T-T0) ---}$$

$$\text{Equation (3)}$$

Correction of a count value according to a temperature may be performed by the oscillation frequency detection circuit 33 or the controller 34 of the position detection sensor 30 or by the position detector 51 of the control device 5.

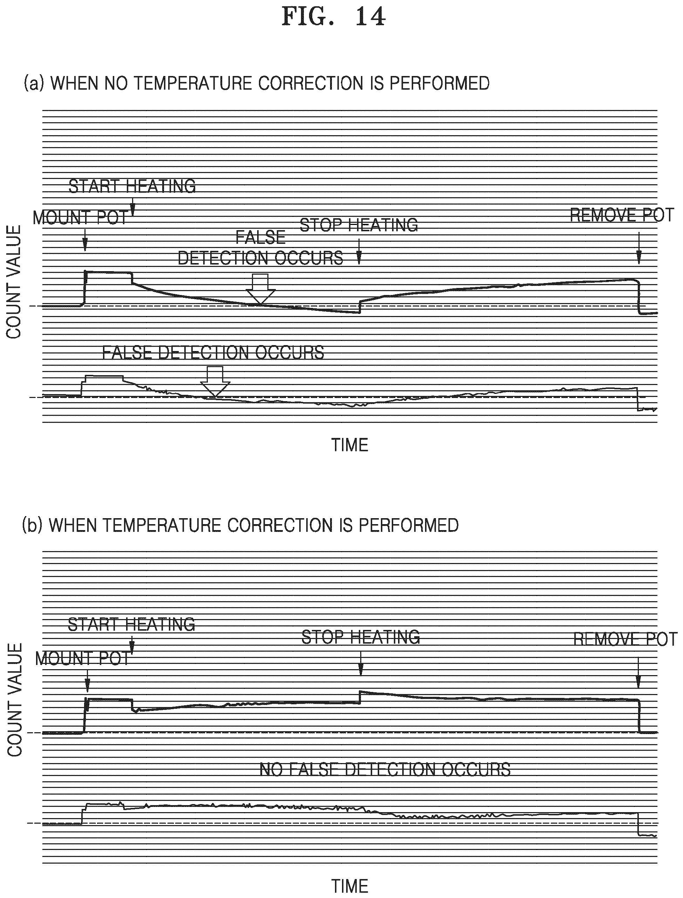

FIG. 14 shows a count value in the case in which no temperature correction is performed and a count value in the case in which temperature correction is performed. FIG. 14(a) shows a change of a detection value in the case in which no temperature correction is performed. In this case, a count value decreases after heating starts, and even though there is a pot, the count value falls below a threshold value for determining that 「there is no pot」, resulting in false detection. Meanwhile, FIG. 14(b) shows a change of a detection value in the case in which temperature correction is performed. In this case, a decrease of a count value is suppressed even after heating starts, thereby preventing false detection.

The induction heating cooker 100 according to an embodiment may compensate a change of an output value (inductance value) of the sensor coil 3, which occurs due to magnetic flux absorption by the heating coil 2 when the heating coil 2 starts to operate. For example, when the heating coil 2 starts to operate, an amount of change of an output value (inductance value) of the sensor coil 3 caused due to magnetic flux absorption by the heating coil 2 may be measured, and the measured amount of change may be added to an output value (inductance value) of the sensor coil 3 after the heating coil 2 starts to operate. In this way, a change of an output value (inductance value) of the sensor coil 3 caused due to magnetic flux absorption by the heating coil 2 may be compensated. Correction of an output value with respect to influence by magnetic flux absorption may be performed by the oscillation frequency detection circuit 33 or the controller 34 of the position detection sensor 30 or by the position detector 51 of the control device 5.

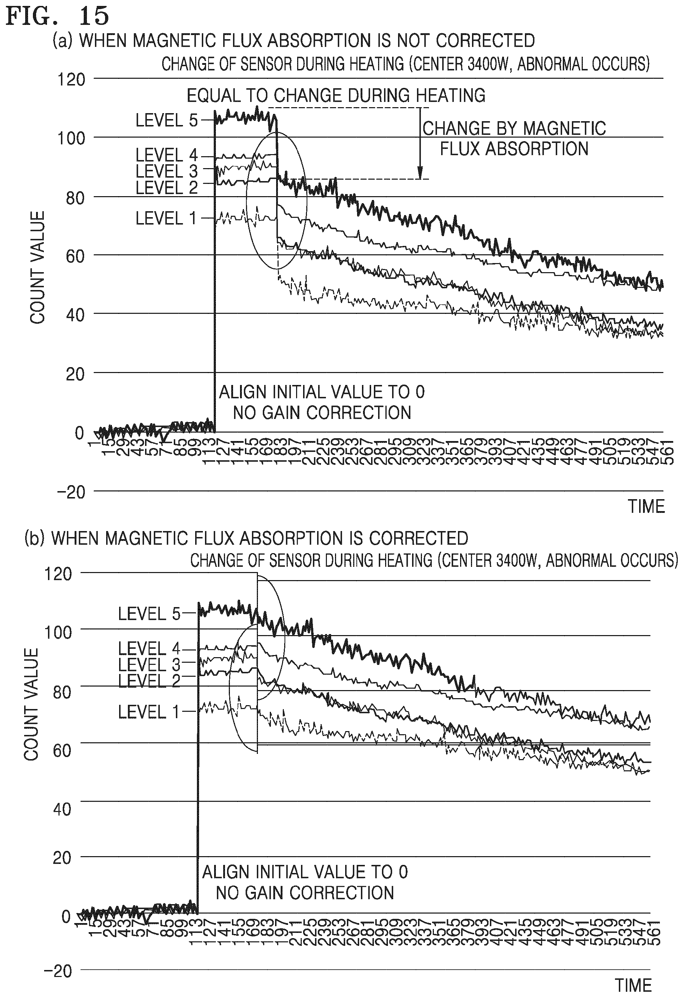

FIG. 15 shows a count value in the case in which magnetic flux absorption is not corrected and a count value in the case in which magnetic flux absorption is corrected. FIG. 15(a) shows a change of a detection value in the case in which magnetic flux absorption is not corrected. In this case, a count value decreases due to magnetic flux absorption by the heating coil 2 after heating starts. Meanwhile, FIG. 15(b) shows a change of a detection value in the case in which magnetic flux absorption is corrected. In this case, a decrease of a count value caused due to magnetic flux absorption by the heating coil 2 is compensated.

An induction heating cooker according to an aspect of the present disclosure may include a top plate, and a substrate positioned on a back surface of the top plate. On the substrate, a heating coil for inductively heating a heating object may be provided in a sheet shape. A sensor coil for detecting a position of the heating object may be integrated into the heating coil and provided on the substrate. By this configuration, because the heating coil and the sensor coil are integrated into one body, a misalignment in position of the sensor coil with respect to the heating coil may be suppressed. Also, because the heating coil having a sheet shape is used, the number of components may be reduced compared to an existing heating coil using litz wires.

As an example, at least two sensor coils may be arranged for one heating coil. The two sensor coils may be arranged diagonally with a center of the heating coil in between. Accordingly, accuracy in detecting a position of a heating object may be improved even though a small number of sensor coils are used.

As an embodiment, the sensor coil may be spaced from a corner portion of the heating coil toward the center of the heating coil. As an embodiment, the sensor coil may be positioned between the corner portion of the heating coil and two imaginary lines that pass through the center of the heating coil and are orthogonal to each other. Accordingly, eddy current loss may be reduced.

As an embodiment, at least two heating coils may be arranged on the substrate. A distance between the two heating coils 2 may be smaller than half an outer diameter of each heating coil. Accordingly, heating efficiency may be ensured while suppressing influence on the sensor coils by the heating coil.

As an embodiment, the substrate may include two or more heating coil layers each including the heating coil and insulated from each other; a sensor layer including the sensor coil; and an insulation layer positioned between the heating coil layers and the sensor layer. The sensor layer may be positioned closer to the top plate than the heating coil layers. As an embodiment, a heating coil layer connected to a resonance capacitor among the two or more heating coil layers may be positioned farther away from the sensor layer than another heating coil layer. Accordingly, the heating coil layer closer to the sensor layer may be designed with a low withstand voltage, which may enable a thin design of the insulation layer.

As an embodiment, the induction heating cooker may include a temperature sensor configured to detect a temperature of at least one of the heating coil or the heating object and integrated into the heating coil and the sensor coil. By integrating the temperature sensor into the heating coil and the sensor coil, product costs may be reduced due to a reduction in wirings, etc.

As an embodiment, the temperature sensor may may be positioned at the center of the heating coil, near the center of the heating coil, or near a connection connector to which the heating coil is connected. Because the temperature sensor is positioned at a location where a temperature is most likely to be high, a temperature of the heating coil or the connection connector may be detected, which enables control on the heating coil with high reliability.

As an embodiment, the connection connector for connecting the heating coil to the control board may be provided on the substrate. The connection connector may be mounted on the substrate in a direction opposite to the top plate. As an embodiment, the connection connector may be provided on the heating coil layer of the substrate, on which the heating coil is provided. Accordingly, a distance between the heating object and the heating coil may be smaller than in a structure in which the connection connector is toward the top plate, and accordingly, the heating object may be efficiently heated.

As an embodiment, the induction heating cooker may include a driving circuit portion connected to the sensor coil; and a protection circuit portion positioned between the sensor coil and the driving circuit portion and configured to protect the driving circuit portion from an induced voltage generated in the sensor coil. As an embodiment, a plurality of sensor coils may be connected to the driving circuit portion, and the protection circuit portion may be provided for each of the plurality of sensor coils.

As an embodiment, the induction heating cooker may include a temperature sensor T configured to detect a temperature of at least one of the heating coil or the heating object. The induction heating cooker may correct an output value of the sensor coil by using a temperature detected by the temperature sensor. The output value of the sensor coil may change by being influenced by a temperature around the sensor coil. More specifically, when resistance of the sensor coil changes depending on a temperature around the sensor coil, the output value of the sensor coil may change. For example, when a temperature around the sensor coil rises, the output value of the sensor coil may decrease. In this case, the output value of the sensor coil may decrease to the same state as 「there is no pot」 during heating, and false detection of 「there is no pot」 may occur, which may result in stopping heating. By correcting an output value of the sensor coil by using a temperature detected by the temperature sensor, false detection and stopping heating due to such false detection may be prevented.

As an embodiment, the induction heating cooker may compensate a change of an output value of the sensor coil caused due to magnetic flux absorption by the heating coil when the heating coil starts to operate. While the heating coil does not operate, the sensor coil may not be influenced by the heating coil because a resonance circuit including the heating coil is not configured. Meanwhile, while the heating coil operates, a resonance circuit including the heating coil may be configured, and magnetic flux generated in a sensor coil near the corresponding heating coil may be absorbed in the heating coil. As a result, there may be possibility that accuracy in detecting a position of a heating object will deteriorate. By compensating a change of an output value of the sensor coil caused due to magnetic flux absorption by the heating coil when the heating coil starts to operate, it may be possible to prevent accuracy in detecting a position of a heating object from deteriorating.

Although the induction heating cooker according to the disclosure have been described in connection with the limited embodiments and the drawings, the disclosure is not limited to the embodiments, and various modifications may be made without departing from the purpose.

**Claims**

**1.** An induction heating cooker comprising:

a top plate 1;
a substrate B positioned on a back surface of the top plate;
a heating coil 2 provided on the substrate and configured to inductively heat a heating object, the heating coil being sheet-shaped; and
a sensor coil 3 provided on the substrate in such a way as to be integrated into the heating coil, and configured to detect a position of the heating object.

2. The induction heating cooker of claim 1, wherein

at least two sensor coils are arranged for one heating coil, and
the two sensor coils are arranged diagonally with a center 2C of the heating coil in between.

3. The induction heating cooker of claim 2, wherein
the sensor coil is spaced apart from a corner portion of the heating coil toward the center 2C of the heating coil.

4. The induction heating cooker of claim 2 or 3, wherein
the sensor coil is positioned between the corner portion of the heating coil and two imaginary lines ZX and ZY that pass through the center 2C of the heating coil and are orthogonal to each other.

5. The induction heating cooker of any one of claims 1 to 4, wherein

at least two heating coils are arranged on the substrate, and
a distance between the at least two heating coils is smaller than half an outer diameter of each heating coil.

6. The induction heating cooker of any one of claims 1 to 5, wherein
the substrate comprises:

two or more heating coil layers B1 each including the heating coil and being insulated from each other;
a sensor layer B2 including the sensor coil; and
an insulation layer B3 positioned between the heating coil layers and the sensor layer,
wherein the sensor layer B2 is positioned closer to the top plate 1 than the heating coil layers B1.

7. The induction heating cooker of claim 6, wherein
a heating coil layer B1a connected to a resonance capacitor 31 among the two or more heating coil layers is positioned farther away from the sensor layer B2 than another heating coil layer B1b.

8. The induction heating cooker of any one of claims 1 to 7, further

comprising
a temperature sensor T configured to detect a temperature of at least one of the heating coil or the heating object and integrated into the heating coil and the sensor coil.

9. The induction heating cooker of claim 8, wherein
the temperature sensor is positioned at the center of the heating coil, near the center of the heating coil, or near a connection connector CN to which the heating coil is connected.

10. The induction heating cooker of any one of claims 1 to 9, wherein

the connection connector CN connecting the heating coil to athe control board is provided on the substrate, and
the connection connector is mounted on the substrate in a direction opposite to the top plate.

11. The induction heating cooker of claim 10, wherein
the connection connector is provided on a heating coil layer B1 of the substrate, on which the heating coil is provided.

12. The induction heating cooker of any one of claims 1 to 11, comprising:

a driving circuit portion 3D connected to the sensor coil; and
a protection circuit portion 35 positioned between the sensor coil and the driving circuit portion and configured to protect the driving circuit portion from an induced voltage generated in the sensor coil.

13. The induction heating cooker of claim 12, comprising
a plurality of the sensor coils connected to the driving circuit portion, wherein the protection circuit portion is provided for each of the plurality of sensor coils.

14. The induction heating cooker of any one of claims 1 to 13, comprising

a temperature sensor T configured to detect a temperature of at least one of the heating coil or the heating object, wherein the induction heating cooker is configured to correct an output value of the sensor coil by using the temperature detected by the temperature sensor.

15. The induction heating cooker of any one of claims 1 to 14, configured to
compensate for a change of an output value of the sensor coil caused due to magnetic flux absorption by the heating coil when the heating coil starts to operate.

FIG. 1

EP 4 615 162 A1

# FIG. 2

HEATING OBJECT

L

C

3

31

32 OSCILLATION AMPLIFIER

33 OSCILLATION FREQUENCY DETECTION CIRCUIT

34 CONTROLLER

30

FIG. 3

FIG. 4

FIG. 5

FIG. 6

(a)

(b)

(c)

(d)

FIG. 7

EP 4 615 162 A1

## FIG. 8

EDDY CURRENT LOSS : ABOUT 0.9W

(a)

EDDY CURRENT LOSS : ABOUT 0.5W

(b)

EDDY CURRENT LOSS : ABOUT 0.18W

(c)

## FIG. 9

# FIG. 10

INPUT

OUTPUT

B2'

B3'

B'

2'

B1'

# FIG. 11

(a)

(b)

## FIG. 12

EP 4 615 162 A1

# FIG. 13

(a) WHEN PROTECTION CIRCUIT PORTION IS OFF (FET: ON)

(b) WHEN PROTECTION CIRCUIT PORTION IS ON (FET: OFF)

# FIG. 14

### (a) WHEN NO TEMPERATURE CORRECTION IS PERFORMED

### (b) WHEN TEMPERATURE CORRECTION IS PERFORMED

# FIG. 15

(a) WHEN MAGNETIC FLUX ABSORPTION IS NOT CORRECTED

CHANGE OF SENSOR DURING HEATING (CENTER 3400W, ABNORMAL OCCURS)

(b) WHEN MAGNETIC FLUX ABSORPTION IS CORRECTED

CHANGE OF SENSOR DURING HEATING (CENTER 3400W, ABNORMAL OCCURS)

## INTERNATIONAL SEARCH REPORT

| International application No. |
| --- |
| **PCT/KR2023/018756** |

| A. | CLASSIFICATION OF SUBJECT MATTER |
| --- | --- |

**H05B 6/12**(2006.01)i; **H05B 6/06**(2006.01)i; **H05B 6/04**(2006.01)i

According to International Patent Classification (IPC) or to both national classification and IPC

| B. | FIELDS SEARCHED |
| --- | --- |

Minimum documentation searched (classification system followed by classification symbols)

H05B 6/12(2006.01); F24C 7/04(2006.01); G01R 15/18(2006.01); H05B 6/04(2006.01); H05B 6/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 유도가열(inductive heat), 가열 코일(heating coil), 센서 코일(sensor coil), 배치 (layout), 온도센서(temperature sensor)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2019-0038171 A (LG ELECTRONICS INC.) 08 April 2019 (2019-04-08)<br>See paragraphs [0065]-[0077]; claims 6-7; and figures 4-5. | 1-15 |
| Y | KR 10-2021-0064156 A (LG ELECTRONICS INC.) 02 June 2021 (2021-06-02)<br>See paragraphs [0059]-[0064] and [0110]; claim 13; and figure 2. | 1-15 |
| A | KR 10-2018-0091542 A (LG ELECTRONICS INC.) 16 August 2018 (2018-08-16)<br>See paragraphs [0166]-[0173]; and figures 8-9. | 1-15 |
| A | KR 10-2022-0141433 A (SK MAGIC CO., LTD.) 20 October 2022 (2022-10-20)<br>See paragraphs [0034]-[0043]; and figures 1-3. | 1-15 |
| A | JP 2018-032503 A (MITSUBISHI ELECTRIC CORP. et al.) 01 March 2018 (2018-03-01)<br>See claims 1-7; and figure 6. | 1-15 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **27 February 2024** | **27 February 2024** |

| Name and mailing address of the ISA/KR | Authorized officer |
| --- | --- |
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/018756**

| Patent document cited in search report | | | Publication date (day/month/year) | Patent family member(s) | | | Publication date (day/month/year) |
|---|---|---|---|---|---|---|---|
| KR | 10-2019-0038171 | A | 08 April 2019 | EP | 3462815 | A1 | 03 April 2019 |
| | | | | EP | 3462815 | B1 | 20 April 2022 |
| | | | | KR | 10-2031420 | B1 | 11 October 2019 |
| | | | | US | 2019-0104573 | A1 | 04 April 2019 |
| KR | 10-2021-0064156 | A | 02 June 2021 | KR | 10-2379826 | B1 | 28 March 2022 |
| KR | 10-2018-0091542 | A | 16 August 2018 | EP | 3582588 | A1 | 18 December 2019 |
| | | | | EP | 3582588 | A4 | 23 December 2020 |
| | | | | EP | 3582588 | B1 | 24 May 2023 |
| | | | | KR | 10-1904642 | B1 | 04 October 2018 |
| | | | | US | 11405990 | B2 | 02 August 2022 |
| | | | | US | 2020-0022228 | A1 | 16 January 2020 |
| | | | | WO | 2018-147621 | A1 | 16 August 2018 |
| KR | 10-2022-0141433 | A | 20 October 2022 | KR | 10-2483449 | B1 | 30 December 2022 |
| JP | 2018-032503 | A | 01 March 2018 | JP | 6861489 | B2 | 21 April 2021 |

Form PCT/ISA/210 (patent family annex) (July 2022)

**EP 4 615 162 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016077445 A